# EUROPEAN PATENT SPECIFICATION

(11) **EP 1 438 918 B1**
(45) Date of publication and mention of the grant of the patent: **16.03.2011**
(21) Application number: 03380219.0
(22) Date of filing: 06.10.2003
(51) Int. Cl.: A47L 9/16

(54) **A vacuum cleaner**
Staubsauger
Aspirateur

(30) Priority: 17.01.2003 ES 200300117
(43) Date of publication of application: 21.07.2004
(73) Proprietor: Panasonic Corporation, Kadoma-shi Osaka 571-8501 (JP)
(72) Inventor: Coll Campos, Jordi Matsushita Electric Espana, SA, 17460 Celra (Girona) (ES); Serrano Gonzalez, Jose Antonio Matsushita Electric, Celra, s/n 17460 Celra (Girona) (ES); Espigol Puig, Carles Matsushita Electric, Celra, s/n 17460 Celra (Girona) (ES); Julia Fabrellas, Marta Matsushita Electric, Celra, s/n 17460 Celra (Girona) (ES); Fujiwara, Yasushi Matsushita Electric, Celra, s/n 17460 Celra (Girona) (ES); Hashizume, Kiyoshi Matsushita Electric, Celra, s/n 17460 Celra (Girona) (ES)
(74) Representative: Eisenführ, Speiser & Partner

(56) References cited:
- WO-A-00/49933
- WO-A-00/74548
- DE-A- 10 132 690

## Description

### OBJECT OF THE INVENTION

The present invention refers to a vacuum cleaner of the centrifugal type and with rigid container, in other words of the kind that does not use a waste collection bag, since it is based on a cyclone effect, produced inside at least one main container, the essential purpose of which consists of the dust particles in the corresponding container being deposited in the bottom thereof and remaining there as much as possible. Furthermore, another additional purpose consists of the T-shaped air inlet into the containers and, depending on the shape and dimension of a projection presented by the container in its air inlet, said container can be filled at the same time as other complementary containers or the air flow can be distributed among them.

Other additional improvements are intended to make its use easier and safer.

### BACKGROUND OF THE INVENTION

Currently, vacuum cleaners without a waste collection bag are known, which base their functioning on a cyclone effect produced in the interior of a cylindrical container, in such a way that the centrifugal effect causes the particles to be thrown against the walls of that container and to be retained in the bottom thereof.

Vacuum cleaners of this type are known that consist of several dust containers without any connection among them and fitted with one or more covers, there existing one or more air outlets via those containers in order to form an outlet collector.

Such vacuum cleaners are for example known from WO 00/49933.

Conventional vacuum cleaners of this type present drawbacks related to the fact that they do not have the facilities so that the dust particles can be deposited in the bottom of the containers and remain there as much as possible. Furthermore, they can also have the drawback that the corresponding containers do not have the facility of an air inlet so that they can be filled at the same time or so that the air flow can be distributed in an optimum manner.

Other disadvantages of these vacuum cleaners refer to aspects of use such as ease of opening, cleaning, folding of its elements, etc.

### DESCRIPTION OF THE INVENTION

The invention consists of a vacuum cleaner comprising various dust containers without any internal connection among them and provided with one or more covers, there existing an air inlet via at least one of the containers, which join to form an outlet collector in a single air outlet towards the motor, and there existing a projection at the inlet of the containers in the form of a half-dome which distributes the air.

The fact of using several containers with a smaller diameter than that of a single tank facilitates the centrifugal effect of the system, permitting the dust particles to be deposited in the bottom of the containers and remain there as much as possible.

The novel projection in a half-dome shape, mentioned above, acts in such a way that when the air arrives via the duct according to a T-shape, depending on the shape and dimension of that projection the containers can be filled at the same time or the air flow can be distributed among them in the most optimum way.

The connection among the said dust containers can be effected in a horizontal plane with respect to the direction of air flow and without bends.

The said containers can receive the air via a duct passing through the centre of the various containers that there are.

There can exist more than one dust container incorporating independent air inlet ducts for each of them, or, as is well known, there can exist several dust containers with a single air inlet duct for them all.

The final sections of the duct referred to above can be straight.

The handle of the said containers can be provided with two buttons which actuate certain securing flanges and which have to be pressed in order to be able to release the container from the casing of the vacuum cleaner.

These buttons can actuate certain side flanges which are the ones that fix the container to the casing of the vacuum cleaner.

The cover of those containers can be located in the proximity of the container handle.

The place where the lock for that cover is fitted can have a wall which protects the said lock, thereby preventing it from being accidentally actuated.

The air ducts of the container can form an integral part with the container handle.

The hose reaching the container can be fitted inside a tube of at least 50 mm in length permitting the said hose to be housed inside it.

This tube can present a side opening in one end that facilitates the guiding of the hose in its location in the vacuum cleaner.

The connection between that hose and the container can be integrated into the hose itself, forming with the aforementioned tube an assembly that can be disconnected and removed from the vacuum cleaner.

This assembly can include a sealing or airtight joint.

The said handle of the vacuum cleaner can include a U-shaped recess in which one or more extension tube can be housed.

The vacuum cleaner can include a transmission pulley between the motor and the rotary brush whose larger diameter does not coincide with the centre of symmetry of that transmission pulley.

The said transmission pulley can present a profile in which the radii of curvature on both sides of the shaft passing through the greater diameter mentioned above are different.

With the configuration that has been described, the vacuum cleaner of the invention presents important advantages, such as the fact that it facilities the centrifugal effect of the system permitting the dust particles to be deposited in the bottom of the containers and remaining there for the maximum length of time possible. Furthermore, depending on the T-shaped air inlet to the container and on the shape and dimension of the projection of the containers in the shape of an oval or spherical half-dome, these containers can be filled at the same time or the air flow can be distributed among them.

Furthermore, other advantages of use are obtained which considerably improve it with respect to other vacuum cleaners based on the same technology.

Below, in order to facilitate a better understanding of this specification and forming an integral part thereof, some figures are attached in which, in an illustrative rather than restrictive manner, the object of the invention has been represented.

### BRIEF DESCRIPTION OF THE DRAWINGS

Figure 1 shows a perspective view of the vacuum cleaner of the invention.
Figure 2 shows a perspective view similar to the previous figure but with the dust containers detached.
Figure 3 shows a detail of the T-shaped air inlet (the arrows of the diagram symbolise the air flow) to the containers of the vacuum cleaner of the invention.
Figure 4 shows another detail of the T-shaped air inlet and the oval or spherical half-dome in the containers of the vacuum cleaner of the invention.
Figure 5 shows a profile view of the containers of the vacuum cleaner of the invention, with the corresponding cover of them being open. The interior design of that cover acts as an air outlet collector of the containers via the duct transporting that air towards the motor.
Figure 6 shows a view similar to the previous figure but with the corresponding cover closed.
Figure 7 shows a profile view of a tube with the hose located in its interior and with a side opening for facilitating its positioning in the vacuum cleaner, provided for the vacuum cleaner of the invention.
Figure 8 shows a profile and diametrically sectioned view of a sealing or airtight joint appearing in the previous figure 7.

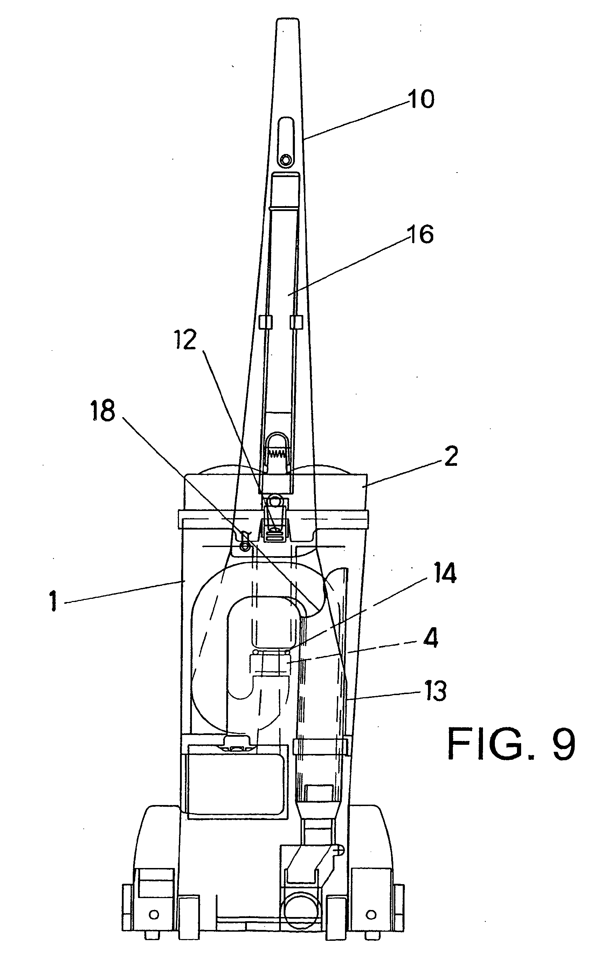

Figure 9 shows a rear elevation view of the vacuum cleaner of the invention, showing in its upper part an extension tube that is included in the rear U-shaped zone of the vacuum cleaner and in its lower part the tube with the hose located inside and positioned via the side opening of the latter in the lower rear part of the vacuum cleaner.
Figure 10 shows a transverse section of the extension tube(s) and the fitting of the handle of the vacuum cleaner referred to in the previous figure 9.
Figure 11 shows a detail in profile of a transmission pulley existing in the lower part of the vacuum cleaner of the invention.
Figure 12 shows the location of the transmission pulley referred to in the previous figure 11 inside the vacuum cleaner and connected to the motor of the vacuum cleaner by means of a transmission belt of the vacuum cleaner of the invention.

### DESCRIPTION OF AN EMBODIMENT OF THE INVENTION

The vacuum cleaner of the present example presents certain dust containers 1 which are circular in section, internally independent of each other, and without any internal connection between them. There is an air inlet 3 for each container 1, these inlets being eventually joined in an air outlet collector where the air is then conducted to the motors via another tube located in the centre of the containers.

Furthermore, the containers 1 contain certain covers 2 which in their interior design perform the function of collector.

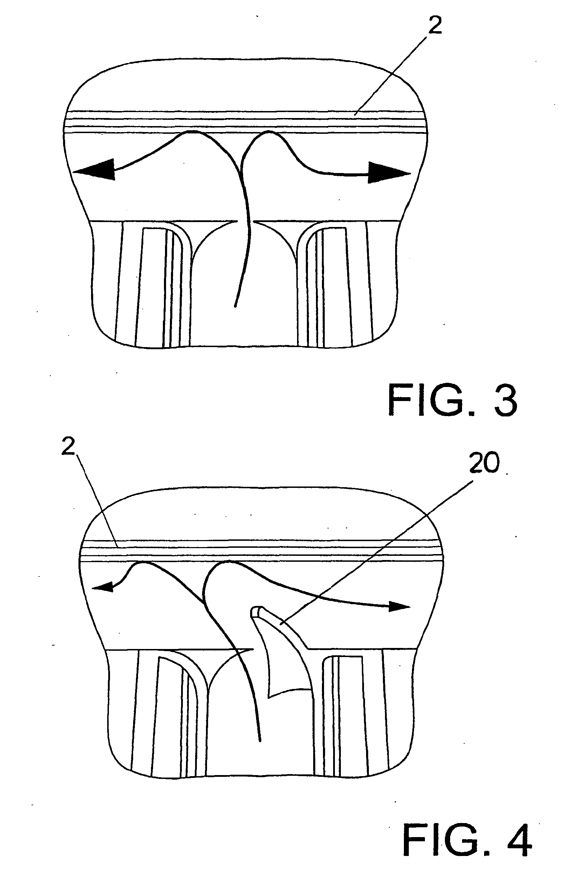

At least one of those outlets 3 is provided with a half-dome shaped projection 20 directed towards one of the containers and which distributes the air. This projection can be seen from figure 4.

Said containers 1 have a circular section which facilitates the centrifugal effect of the system, permitting the dust particles to be deposited and remain there as much as possible, circulating in the bottom of the containers 6. Depending on the shape and dimension of the half-dome shaped projection, the containers 1 can be filled at the same time or the air flow can be distributed between them.

In the present example, the connection of the said containers 1 is effected in a horizontal plane with respect to the T-shaped direction of the air inlet to the containers and without any bends.

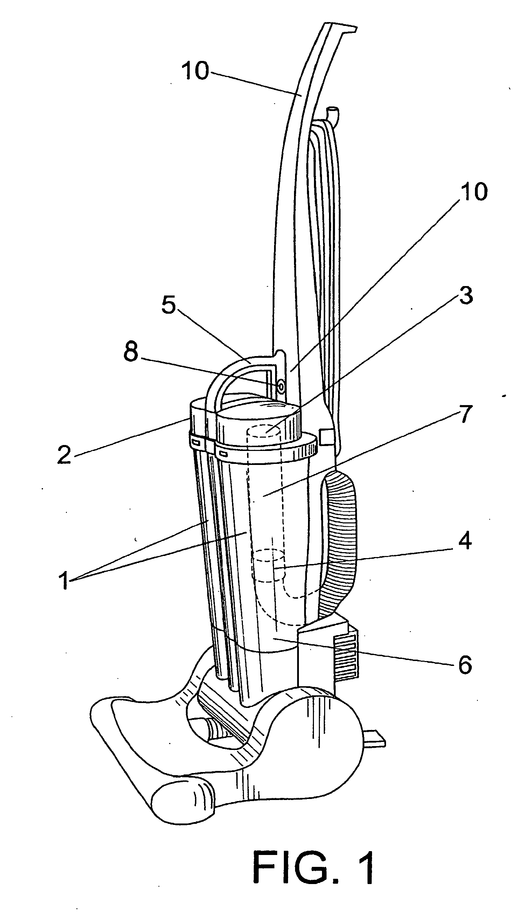

According to the present embodiment, the containers 1 receive their air via a duct 7 which passes approximately through the centre of the various containers that there are, as represented in figure 1.

The final sections of the duct 7 can be straight (minimum 50 mm) as occurs in the present example.

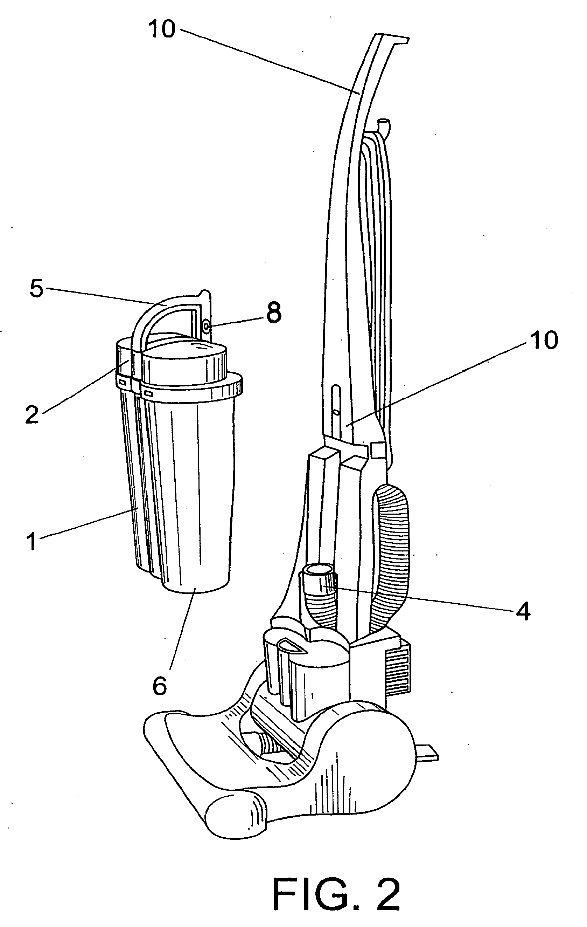

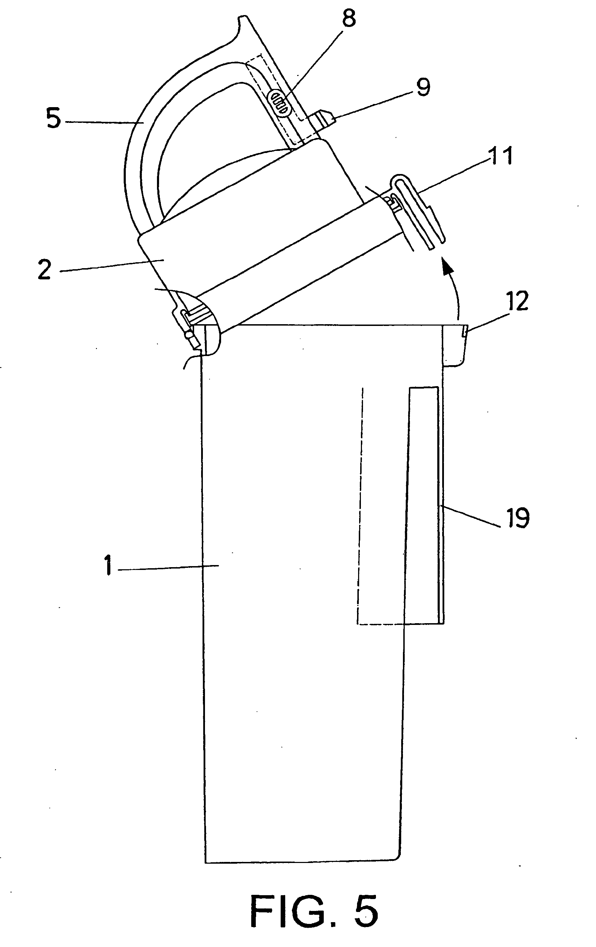

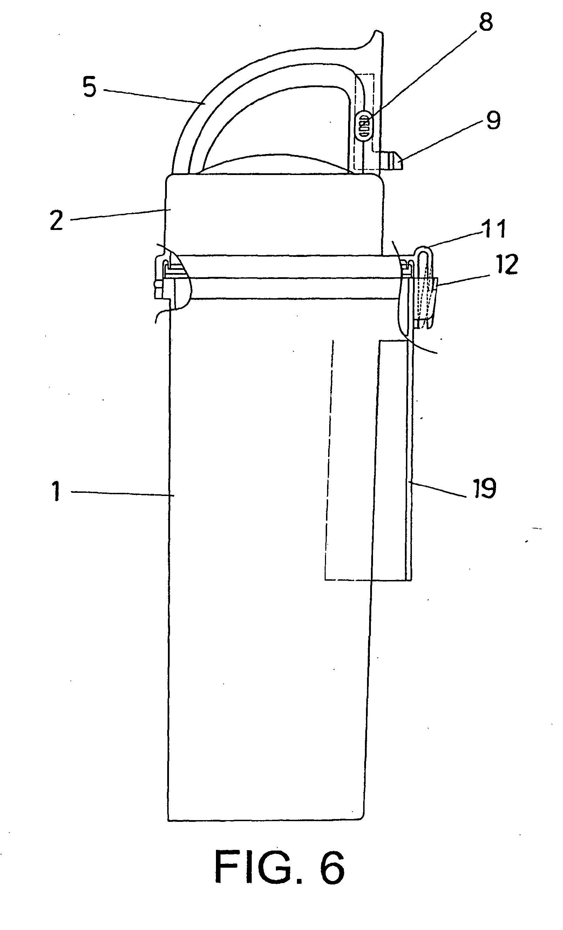

A handle 5 of the said containers 1 is located on the cover or covers thereof and can be provided with two buttons 8 which have to be pressed in order to release and remove the containers from the casing of the vacuum cleaner, as represented in figure 2. Those buttons can be seen more clearly in figures 5 and 6.

Those buttons 8 permit actuation of some side flanges 9 which are the mechanism securing the containers to the casing of the vacuum cleaner.

The cover or covers 2 of the containers can be located in the proximity of the handle 10 of the vacuum cleaner.

Said handle 10 includes a U-shaped recess 15 where one or more extension tubes 16 are housed.

The position located on the container itself, where the lock 11 of the said cover fits, can have a wall 12 which protects the said lock in its position of use, thereby preventing it from being accidentally actuated.

The air inlet and outlet ducts of the container or containers can form an integral part with the handle 19 of the containers.

In the present embodiment, the hose which reaches the containers and connects with them in a horizontal plane is fitted in a tube 13 of at least 50 mm in length, permitting the said hose to be housed in its interior.

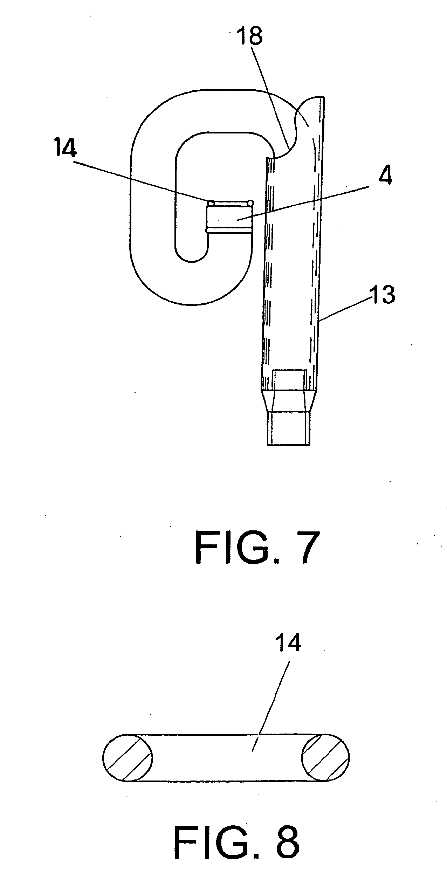

The tube 13 can present a side opening 18 in one of its ends which facilitates the guiding and positioning of the hose in its connection to the vacuum cleaner, as occurs in the present example, and as represented in figure 7.

The connection 4 between the said hose and the containers can be integrated into the hose itself, forming an assembly that can be disconnected and removed from the vacuum cleaner.

This assembly can include a sealing or airtight joint 14 where one or more extension tubes can be housed.

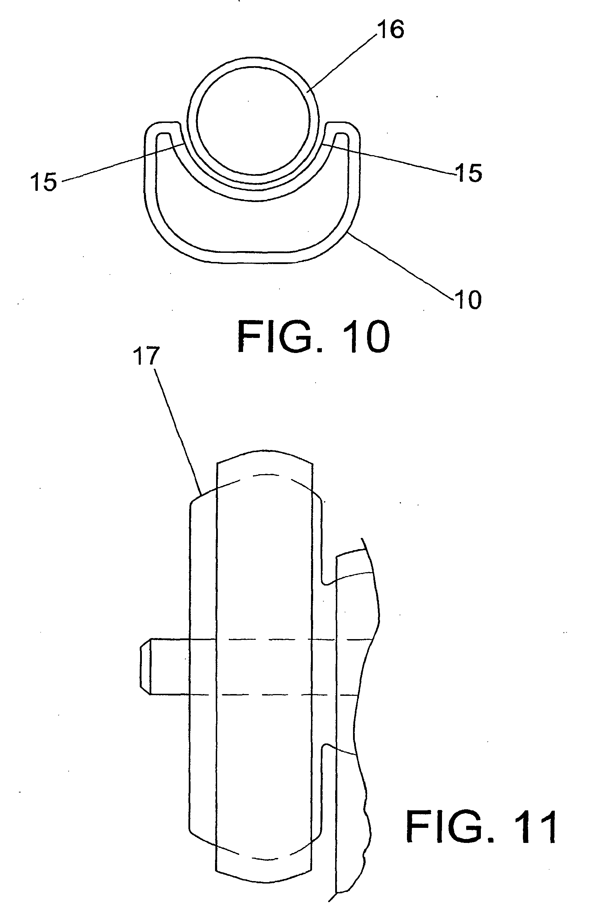

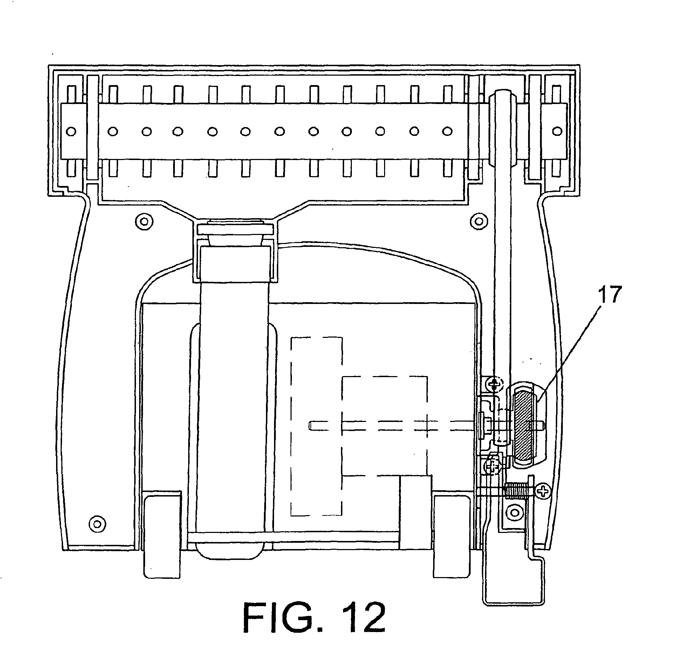

The transmission pulley 17 shown in figures 11 and 12 has a larger diameter which may not coincide with the centre of symmetry of that transmission pulley, as occurs in the present example.

In this embodiment, the pulley 17 has a profile in which the radii of curvature on both sides of the shaft passing through the greater diameter mentioned above are different.

With this embodiment, the functioning of the transmission is considerably improved, in such a way that the belt that is pulled by this transmission pulley 17 does not come out of its working position due to the rotational effect, all this without any need to use conventional parts or other parts as normally occurs in this type of device.

## Claims

1. A vacuum cleaner comprising a plurality of dust containers (1) without connection among them and provided with one or more covers (2) which in their interior design perform an outlet collector function, there existing an air inlet (3) via at least one of the containers which are joined forming the said air outlet collector in the interior of the cover or covers (2) and in a single air outlet towards the motor, **characterised in that**: at the inlet of the containers, there is a projection in a half-dome shape (20) which distributes the air: for enabling the containers (1) to be filled at the same time or the air flow to be distributed among the containers (1) depending on the shape and dimension of said projection; and for the air to enter the containers (1) in a direction perpendicular to the covers (2), with a corresponding flow defining a T-shape when it arrives at the covers (2).

2. A vacuum cleaner according to claim 1, **characterised in that** the connection of the said dust containers (1) is carried out in a horizontal plane with respect to the T-shaped air inlet direction.

3. A vacuum cleaner according to claim 1, **characterised in that** the said containers (1) receive the air via a duct (7) which passes approximately through the centre of the plurality of containers, and when passage through the collector ends, the latter exits towards the motor via another tube located in the centre of the containers.

4. A vacuum cleaner according to claim 3, **characterised in that** the final sections of the said duct (7) are straight, having a minimum length of 50 mm.

5. A vacuum cleaner according to claim 1, **characterised in that** a handle (5) of the vacuum cleaner has two buttons (8) located at a certain distance from the handle which have to be pressed for releasing the container from the casing of the vacuum cleaner by means of side flanges (9).

6. A vacuum cleaner according to claim 1, **characterised in that** the cover/s (2) of said containers is/are located in the proximity of the handle (10) of the vacuum cleaner; the lock of the dust container being located in said cover and said lock being close to the handle of the containers; said cover/s (2), in their interior design, acting as a distribution collector for the air from containers towards the motor.

7. A vacuum cleaner according to claim 1, **characterised in that** the place of the containers where the lock (11) of the said cover/s fits has a wall (12) which protects the said lock (11), preventing it from being accidentally actuated.

8. A vacuum cleaner according to claim 1, **characterised in that** the air inlet and outlet ducts of the container form an integral part with a handle (19) of the containers.

9. A vacuum cleaner according to claim 1, **characterised in that** a hose which reaches the containers is fitted in a tube (13) of at least 50 mm in length , which permits the said hose to be housed in its interior.

10. A vacuum cleaner according to claim 9, **characterised in that** the said tube (13) has a side opening (18) at one end which facilitates the guiding of the hose in its location in the casing of the vacuum cleaner.

11. A vacuum cleaner according to claim 10, **characterised in that** the connection (4) between said hose and the container is integrated into the hose itself, forming an assembly dismountable and removable from the vacuum cleaner.

12. A vacuum cleaner according to claim 11, **characterised in that** the said assembly includes a sealing joint (14).

13. A vacuum cleaner according to claim 6, **characterised in that** the said handle (10) of the vacuum cleaner has a U-shaped recess (15) where one or more extension tubes (16) are housed.

14. A vacuum cleaner according to claim 1, **characterised in that** it comprises a transmission pulley (17) with a larger diameter not coinciding with the centre of symmetry of said transmission pulley.

15. A vacuum cleaner according to claim 14, **characterised in that** the said transmission pulley (17) has a profile in which the radii of curvature on both sides of the shaft passing through the larger diameter are different.

16. A vacuum cleaner according to claim 1, **characterised in that** there exists an independent air inlet duct (3) for each container (1).

## Patentansprüche

1. Staubsauger, der mehrere Staubbehälter (1) ohne Verbindung zwischen diesen umfasst und mit einer oder mehreren Abdeckungen (2) versehen ist, die mit ihrer inneren Gestaltung eine Auslasssammlerfunktion erfüllen, wobei ein Lufteinlass (3) über wenigstens einen der Behälter vorhanden ist, und die verbunden sind und den Luftauslasssammler im Inneren der Abdeckung oder der Abdeckungen (2) und in einem einzelnen Luftauslass in Richtung zum Motor bilden, **dadurch gekennzeichnet, dass**: am Einlass der Behälter ein Vorsprung in einer Halbkuppelform (20) vorgesehen ist, der die Luft verteilt, um: ein gleichzeitiges Füllen der Behälter (1) zu ermöglichen, oder zu ermöglichen, dass der Luftstrom in Abhängigkeit von der Form und der Abmessung des Vorsprungs auf die Behälter (1) verteilt wird; die Luft zu veranlassen, in die Behälter (1) in einer Richtung senkrecht zu den Abdeckungen (2) einzutreten, mit einer entsprechenden Strömung, die eine T-Form bildet, wenn sie an den Abdeckungen (2) ankommt.

2. Staubsauger nach Anspruch 1, **dadurch gekennzeichnet, dass** die Verbindung der Staubbehälter (1) in einer horizontalen Ebene bezüglich der T-förmigen Lufteinlassrichtung ausgeführt ist.

3. Staubsauger nach Anspruch 1, **dadurch gekennzeichnet, dass** die Behälter (1) die Luft über einen Kanal (7) aufnehmen, der näherungsweise durch das Zentrum der mehrere Behälter verläuft, wobei dort, wo der Verlauf durch die Behälter endet, der Letztere in Richtung des Motors über ein weiteres Rohr austritt, das im Zentrum der Behälter angeordnet ist.

4. Staubsauger nach Anspruch 3, **dadurch gekennzeichnet, dass** die Endabschnitte des Kanals (7) gerade sind und eine minimale Länge von 50 mm aufweisen.

5. Staubsauger nach Anspruch 1, **dadurch gekennzeichnet, dass** ein Griff (5) des Staubsaugers zwei Knöpfe (8) aufweist, die in einem bestimmten Abstand von dem Griff angeordnet sind und niedergedrückt werden müssen, um den Behälter von dem Gehäuse des Staubsaugers mittels Seitenflanschen (9) zu lösen.

6. Staubsauger nach Anspruch 1, **dadurch gekennzeichnet, dass** die Abdeckung/en (2) der Behälter in der Nähe des Griffes (10) des Staubsaugers angeordnet ist/sind; der Verschluss des Staubbehälters in der Abdeckung angeordnet ist und der Verschluss sich nahe am Griff der/des Behälter/s befindet; die Abdeckung/en (2) in ihrer inneren Gestaltung als ein Verteilungssammler für die Luft aus den Behältern in Richtung zum Motor dient/dienen.

7. Staubsauger nach Anspruch 1, **dadurch gekennzeichnet, dass** die Stelle der Behälter, an der der Verschluss (11) der/des Behälter/s sitzt, eine Wand (12) aufweist, die den Verschluss (11) schützt und ein versehentliches Betätigen desselben verhindert.

8. Staubsauger nach Anspruch 1, **dadurch gekennzeichnet, dass** die Lufteinlass- und Auslasskanäle des Behälters ein integrales Teil mit einem Griff (19) der Behälter bilden.

9. Staubsauger nach Anspruch 1, **dadurch gekennzeichnet, dass** ein Schlauch, der zu den Behältern führt, in ein Rohr (13) von wenigstens 50 mm Länge eingesetzt ist, das ermöglicht, dass der Schlauch in seinem Inneren aufgenommen wird.

10. Staubsauger nach Anspruch 9, **dadurch gekennzeichnet, dass** das Rohr (13) eine Seitenöffnung (18) an einem Ende aufweist, die das Führen des Schlauches an seine Stelle in dem Gehäuse des Staubsaugers erleichtert.

11. Staubsauger nach Anspruch 10, **dadurch gekennzeichnet, dass** die Verbindung (4) zwischen dem Schlauch und dem Behälter in den Schlauch selbst integriert ist, wobei eine vom Staubsauger demontierbare und abnehmbare Baueinheit gebildet wird.

12. Staubsauger nach Anspruch 11, **dadurch gekennzeichnet, dass** die Baueinheit eine Dichtungsfuge (14) enthält.

13. Staubsauger nach Anspruch 6, **dadurch gekennzeichnet, dass** der Griff (10) des Staubsaugers eine U-förmige Vertiefung (15) aufweist, in der ein oder mehrere Verlängerungsrohre (16) aufgenommen sind.

14. Staubsauger nach Anspruch 1, **dadurch gekennzeichnet, dass** er eine Übertragungsscheibe (17) umfasst, die einen größeren Durchmesser aufweist, der nicht mit dem Symmetriezentrum der Übertragungsscheibe zusammenfällt.

15. Staubsauger nach Anspruch 14, **dadurch gekennzeichnet, dass** die Übertragungsscheibe (17) ein Profil aufweist, bei dem die Krümmungsradien auf beiden Seiten der Welle, die durch den größeren Durchmesser laufen, unterschiedlich sind.

16. Staubsauger nach Anspruch 1, **dadurch gekennzeichnet, dass** ein unabhängiger Lufteinlasskanal (3) für jeden Behälter (1) vorhanden ist.

## Revendications

1. Aspirateur comprenant une pluralité de réceptacles à poussière (1) non reliés entre eux et dotés d'un ou de plusieurs couvercles (2) qui dans leur conception intérieure réalisent une fonction de type collecteur de sortie, il existe une entrée d'air (3) à travers au moins l'un des réceptacles qui sont reliés pour former ledit collecteur de sortie d'air à l'intérieur du couvercle ou des couvercles (2) et dans une seule sortie d'air vers le moteur, **caractérisé en ce que** : à l'entrée des réceptacles, se trouve une projection en forme de demi-dôme (20) qui distribue l'air : pour permettre le remplissage des réceptacles (1) en même temps ou la distribution du débit d'air entre les réceptacles (1) en fonction de la forme et de la dimension de ladite projection ; et pour que l'air rentre dans les réceptacles (1) dans une direction perpendiculaire aux couvercles (2), avec un débit correspondant définissant une forme de T lorsqu'il parvient aux couvercles (2).

2. Aspirateur selon la revendication 1, **caractérisé en ce que** la liaison desdits réceptacles (1) à poussière est réalisée dans un plan horizontal par rapport à la direction d'entrée d'air en forme de T.

3. Aspirateur selon la revendication 1, **caractérisé en ce que** lesdits réceptacles (1) reçoivent l'air par l'intermédiaire d'un conduit (7) qui passe approximativement à travers le centre de la pluralité des réceptacles, et lorsqu'il finit de passer à travers le collecteur, l'air sort vers le moteur par un autre tube positionné au centre des réceptacles.

4. Aspirateur selon la revendication 3, **caractérisé en ce que** les derniers tronçons dudit conduit (7) sont droits, avec une longueur minimale de 50 mm.

5. Aspirateur selon la revendication 1, **caractérisé en ce qu'**une poignée (5) de l'aspirateur a deux boutons (8) positionnés à une certaine distance de la poignée sur lesquels on doit appuyer pour libérer le réceptacle du boîtier de l'aspirateur au moyen de rebords latéraux (9).

6. Aspirateur selon la revendication 1, **caractérisé en ce que** le ou les couvercles (2) desdits réceptacles est/sont positionnés à proximité de la poignée (10) de l'aspirateur ; le verrou du réceptacle à poussière étant positionné dans ledit couvercle et ledit verrou étant proche de la poignée du/des réceptacle(s) ; ledit/lesdits couvercle(s) (2), dans leur conception intérieure, agissant comme un collecteur de distribution de l'air des réceptacles vers le moteur.

7. Aspirateur selon la revendication 1, **caractérisé en ce que** la place des réceptacles, où le verrou (11) dudit/desdits couvercle(s) est ajusté, a une paroi (12) qui protège ledit verrou (11), l'empêchant d'être accidentellement actionné.

8. Aspirateur selon la revendication 1, **caractérisé en ce que** les conduits d'entrée et de sortie d'air du réceptacle forment une partie intégrée avec une poignée (19) des réceptacles.

9. Aspirateur selon la revendication 1, **caractérisé en ce qu'**un tuyau qui atteint les réceptacles est ajusté dans un tube (13) d'au moins 50 mm de longueur, qui permet audit tuyau d'être logé en son intérieur.

10. Aspirateur selon la revendication 9, **caractérisé en ce que** ledit tube (13) a une ouverture (18) latérale au niveau d'une extrémité qui facilite le guidage du tuyau à sa position dans le boîtier de l'aspirateur.

11. Aspirateur selon la revendication 10, **caractérisé en ce que** la liaison (4) entre lesdits tuyau et réceptacle est intégrée dans le tuyau lui-même, formant un assemblage démontable et amovible de l'aspirateur.

12. Aspirateur selon la revendication 11, **caractérisé en ce que** ledit assemblage comporte un joint (14) d'étanchéité.

13. Aspirateur selon la revendication 6, **caractérisé en ce que** ladite poignée (10) de l'aspirateur a un évidement (15) en forme de U où un ou plusieurs tubes (16) d'extension sont logés.

14. Aspirateur selon la revendication 1, **caractérisé en ce qu'**il comprend une poulie (17) de transmission avec un plus grand diamètre ne coïncidant pas avec le centre de symétrie de ladite poulie de transmission.

15. Aspirateur selon la revendication 14, **caractérisé en ce que** ladite poulie (17) de transmission a un profil dans lequel les rayons de courbure sur les deux côtés de l'arbre passant à travers le plus grand diamètre sont différents.

16. Aspirateur selon la revendication 1, **caractérisé en ce qu'**il y a un conduit d'entrée d'air (3) indépendant pour chaque réceptacle (1).
